# EUROPÄISCHE PATENTSCHRIFT

(11) **EP 2 878 488 B1**
(45) Veröffentlichungstag und Bekanntmachung des Hinweises auf die Patenterteilung: **23.03.2016**
(21) Anmeldenummer: 14193455.4
(22) Anmeldetag: 17.11.2014
(51) Int. Cl.: B60Q 3/00, B60Q 3/02, B60H 1/34, F24F 13/14, F24F 13/06, B60H 1/00

(54) **Luftausströmer**
Air vent
Dispositif d'écoulement d'air

(30) Priorität: 02.12.2013 DE 102013113319
(43) Veröffentlichungstag der Anmeldung: 03.06.2015
(73) Patentinhaber: TRW Automotive Electronics & Components GmbH, 78315 Radolfzell (DE)
(72) Erfinder: Weber, Jonathan, 66903 Dittweiler (DE); Andrew, LeFever, 57550 Remering (FR)
(74) Vertreter: Prinz & Partner mbB

(56) Entgegenhaltungen:
- EP-A2- 1 832 452
- DE-C1- 19 735 858
- DE-U1-202009 005 100
- FR-A1- 2 939 208
- US-A1- 2009 298 406

## Beschreibung

Die vorliegende Erfindung betrifft einen Luftausströmer.

Aus dem Stand der Technik sind bereits Luftausströmer für Kraftfahrzeuge bekannt. Die Luftausströmer werden beispielsweise eingesetzt, um das Innere des Kraftfahrzeuges zu belüften und zu klimatisieren,

Mit dem Luftausströmer können Richtung und Volumen des in den Fahrzeuginnenraum einströmenden Luftstromes eingestellt werden. Hierzu sind am Luftausströmer Lamellen oder Einsätze sowie Klappen vorgesehen.

Um die Bedienung dieser Luftausströmer auch bei Dunkelheit, z.B. bei Fahrten in der Nacht, zu ermöglichen, werden die Luftausströmer teilweise beleuchtet.

Aus dem Stand der Technik sind bereits Luftausströmer für Kraftfahrzeuge bekannt, die hinterleuchtet sind.

So beschreibt beispielsweise die DE 20 2011 110 265 U1 eine Belüftungsvorrichtung für ein Fahrzeug, wobei die Belüftungsvorrichtung eine Ausströmdüse und Leuchtmittel aufweist. Die Leuchtmittel lassen erkennen, ob der Luftstrom aus der Ausströmdüse in das Fahrzeuginnere strömen kann.

Die DE 201 18 014 U1 offenbart eine Luftdüse für den Auslass eines Luftstromes aus einem Luftzuführungsschacht. Die Luftdüse weist ein Bedienelement auf, das eine Verstellung der Lamellen der Luftdüse ermöglicht. Dieses Bedienelement weist einen hinterleuchtbaren Lichtaustrittsabschnitt auf, der bei Dunkelheit die Ausrichtung des Bedienelements und damit des Luftstroms erkennen lässt.

Die US 2009/0298406, die als nächstliegender Stand der Technik angesehen wird, beschreibt ein Luftausströmer mit Lichtleiter.

Alle vorgenannten Belüftungsdüsen weisen aber den Nachteil auf, dass sie z.B. bei Dunkelheit die Einstellung des durch den Luftausströmers ausströmenden Luftmassenstroms nicht erkennen lassen.

Es ist daher die Aufgabe der vorliegenden Erfindung, einen Luftausströmer der eingangs genannten Art in vorteilhafter Weise weiterzubilden, insbesondere dahingehend, dass eine Bedienung des Luftausströmers auch in der Nacht einfach und intuitiv möglich ist.

Diese Aufgabe wird erfindungsgemäß gelöst durch einen Luftausströmer mit den Merkmalen des Anspruchs 1. Danach weist ein Luftausströmer einen Einstelleinsatz zur Einstellung des durch den Luftausströmer ausströmenden Luftstromes auf, wobei der Luftstrom durch eine Verdrehung des Einstelleinsatzes einstellbar ist, mit wenigstens einem ersten Lichtleiter und mit wenigstens einem zweiten Lichtleiter, wobei der erste Lichtleiter fest an einem Gehäuse des Luftausströmers und der zweite Lichtleiter fest am Einstelleinsatz befestigt ist. Der erste Lichtleiter und der zweite Lichtleiter sind gegeneinander verdrehbar und der zweite Lichtleiter ist durch den ersten Lichtleiter beleuchtbar. Durch den zweiten Lichtleiter ist weiter ein hinterleuchtbarer Abschnitt des Einstelleinsatzes beleuchtbar. Dadurch ergibt sich der Vorteil, dass der erfindungsgemäße Luftausströmer auch bei Dunkelheit einfach und intuitiv bedienbar ist. Die Hinterleuchtung des Luftausströmers erfordert keine aufwendige Konstruktion, sondern sie kann in einfacher Bauweise realisiert werden. Über eine oder mehrere LEDs kann Licht in den ersten Lichtleiter eingeleitet und von dort in den zweiten Lichtleiter weitergeleitet werden. Die Verdrehung des hinterleuchtbaren Abschnittes erfolgt insbesondere synchron zur Verdrehung des Einstelleinsatzes, mit dem der durch den Luftausströmer ausströmende Luftstrom eingestellt wird. Die Beleuchtung des zweiten Lichtleiters erfolgt über den gesamten Verstellbereich homogen. Folglich wird im Wesentlichen über den gesamten Verstellbereich der hinterleuchtbare Abschnitt mit im Wesentlichen derselben Intensität beleuchtet. Anhand der Stellung des hinterleuchtbaren Abschnittes kann einfach und zuverlässig die Verdrehung des Einstelleinsatzes und damit die Einstellung bzw. Intensität des durch Luftausströmer ausströmenden Luftstromes abgelesen und ggf. entsprechend eingestellt werden.

Die eingesetzte LED bzw. Leuchtdiode kann beispielsweise eine RGB-Farbleuchtdiode (RGB-LED) sein. Dadurch kann die Farbe der Beleuchtung eingestellt werden oder durch den Fahrer frei wählbar sein. Möglich ist auch, dass die Farbe der Beleuchtung an Fahr-Modi des Herstellers voreinstellbar bzw. anpassbar ist. So kann beispielsweise dem ECO-Modus eine grüne Beleuchtung und dem Sport-Modus eine rote Beleuchtung usw. zugeordnet sein.

Darüber hinaus ist denkbar, dass der erste Lichtleiter zumindest teilweise, vorzugsweise vollständig, als Leuchtfolie ausgebildet ist. Dadurch ergibt sich der Vorteil, dass beispielsweise auf den Einsatz von LEDs verzichtet werden kann.

Des Weiteren kann vorgesehen sein, dass der Einstelleinsatz einen Verstellring umfasst, wobei der Verstellring und der zweite Lichtleiter miteinander verbunden sind. Der Verstellring ermöglicht eine einfache Verstellung des Einstelleinsatzes und damit eine einfache Einstellung des durch den Luftausströmer ausströmenden Luftstromes. Die Verbindung von Verstellring und zweitem Lichtleiter ist eine besonders einfache und zuverlässige Möglichkeit, die Verdrehung des Einstelleinsatzes mit der Verdrehung des hinterleuchtbaren Abschnittes zu koppeln.

Vorzugsweise kann der Einstelleinsatz einen Zierring umfassen, in dem der hinterleuchtbare Abschnitt angeordnet ist. Der Zierring dient unter Anderem zur Verblendung des Spaltes zwischen Einstelleinsatz und dem Gehäuse des Luftauströmers. Durch das Anordnen des hinterleuchtbaren Abschnittes auf dem Zierring können mehrere Funktionselemente des Einstelleinsatzes in einem einzigen Bauteil zusammengefasst werden. Außerdem ermöglicht dies eine optisch ansprechende Gestaltung. Beispielsweise kann der Zierring auf den Verstellring aufgeklipst bzw. an diesem befestigt werden.

Außerdem kann vorgesehen sein, dass der hinterleuchtbare Abschnitt ein An-Aus-Symbol ist. Dieses Symbol ist weltweit verbreitet und wird aufgrund seiner Verbreitung nahezu überall auf der Welt verstanden. Im Vergleich zu bislang bekannten Systemen wird die Bedienbarkeit des Luftausströmers so deutlich verbessert. Darüber hinaus kann der Bediener mit einem Blick erkennen, ob der Luftausströmer geschlossen oder offen ist. Anhand der Stellung des hinterleuchtbaren Abschnitts erkennt der Bediener zudem die derzeitige Einstellung des Luftausströmers.

Es ist möglich, dass der Luftauströmer beleuchtbar ist, sobald das Fahrzeug entriegelt oder gestartet wird bzw. sobald die die Beleuchtung des Fahrzeugs eingeschaltet wird.

Denkbar ist auch, dass die Lichtintensität mit zunehmenden Öffnen der Klappen des Luftausströmers gesteigert wird.

Vorzugsweise weist der zweite Lichtleiter einen Lichtaufnehmabschnitt auf, mittels dessen das Licht vom ersten Lichtleiter zum zweiten Lichtleiter kanalisiert übertragbar ist. Dadurch werden Übertragungsverluste des Lichtes zwischen dem ersten und dem zweiten Lichtleiter verringert.

Weiter kann vorgesehen sein, dass der erste und der zweite Lichtleiter sich nicht berühren. Dies verhindert ein Verklemmen des ersten und zweiten Lichtleiters und stellt sicher, dass der erste und zweite Lichtleiter ohne Probleme gegeneinander verdreht werden können. Zwischen dem ersten und dem zweiten Lichtleiter kann ein Spalt von weniger als einem Millimeter vorgesehen sein.

Darüber hinaus kann der Einstelleinsatz einen ersten Drehanschlag und einen zweiten Drehanschlag aufweisen, die einen Betätigungsbereich für den Einstelleinsatz definieren. Der Einstelleinsatz kann ausschließlich zwischen dem ersten Drehanschlag und dem zweiten Drehanschlag verdrehbar sein. Eine Einstellung des durch den Luftausströmer ausströmenden Luftstromes erfolgt zwischen ersten und zweiten Drehanschlag. In der Stellung des ersten Drehanschlags strömt keine Luft durch den Luftausströmer und in der Stellung des zweiten Drehanschlags strömt Luft mit maximalem Luftmassenstrom durch den Luftausströmer.

Des Weiteren kann eine Schaltvorrichtung vorgesehen sein, die die Beleuchtung des Luftausströmers aus- oder einschaltet, und dass das Erreichen oder Verlassen des ersten Drehanschlages die Schaltvorrichtung betätigt.

Vorzugsweise ist in der Stellung des ersten Drehanschlages der Luftausströmer verschlossen, so dass keine Luft durch den Luftausströmer ausströmt, und dass in der Stellung des zweiten Drehanschlages der Luftausströmer maximal geöffnet ist.

Insbesondere kann die Verstellvorrichtung wenigstens ein Getriebeelement zur Betätigung einer Klappenmechanik des Luftausströmers umfassen, wobei mittels des Getriebeelementes zugleich die Schaltvorrichtung betätigbar ist.

Weitere Merkmale und Vorteile der Erfindung ergeben sich aus der nachfolgenden Beschreibung und aus den nachfolgenden Zeichnungen, auf die Bezug genommen wird. Es zeigen:
- Figur 1 eine perspektivische Ansicht der relevantesten Bauteile eines erfindungsgemäßen Luftausströmers;
- Figur 2 eine Draufsicht auf den Luftausströmer gemäß Figur 1;
- Figur 3 eine perspektivische Ansicht des Zierringes des Luftausströmers gemäß Figur 1;
- Figur 4 eine perspektivische Detailansicht auf die Lichtleiter des Luftausströmers gemäß Figur 1;
- Figur 5 eine schematische Ansicht auf den ersten Lichtleiter des Luftausströmers gemäß Figur 1;
- Figur 6 eine perspektivische Seitenansicht auf die beiden Lichtleiter des Luftausströmers gemäß Figur 1;
- Figur 7 eine perspektivische Draufsicht auf die beiden Lichtleiter des Luftausströmers gemäß Figur 1;
- Figur 8 eine perspektivische Detailansicht auf den hinterleuchtbaren Abschnitt des Einstelleinsatzes des Luftausströmers gemäß Figur 1;
- Figur 9 eine perspektivische Seitenansicht auf die Klappenmechanik des Luftausströmers gemäß Figur 1.

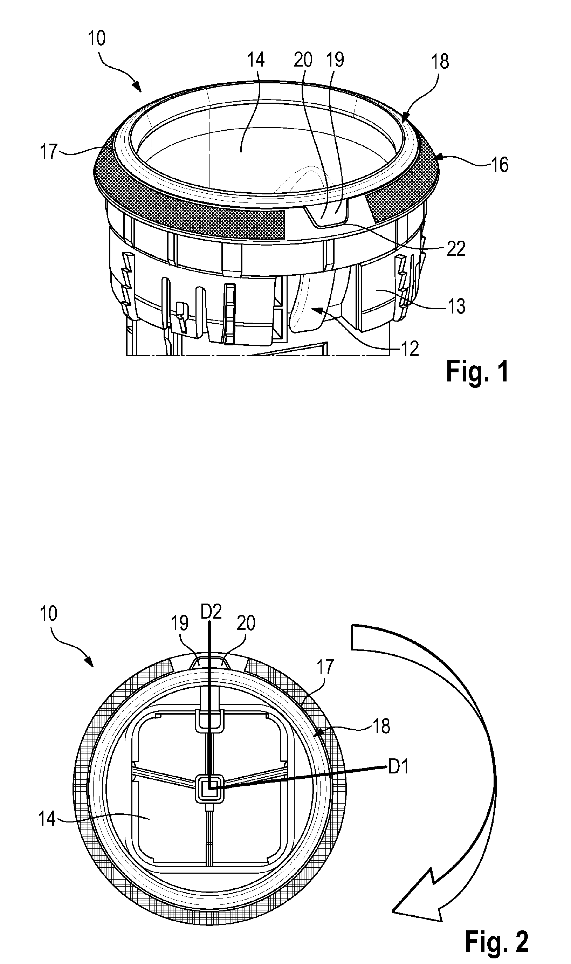

Figur 1 zeigt eine perspektivische Ansicht eines Ausführungsbeispiels eines erfindungsgemäßen Luftausströmers 10 für ein Kraftfahrzeug. Dabei sind nur die Bauteile dargestellt, die für das Verständnis der Erfindung notwendig oder hilfreich sind.

Der Luftausströmer 10 weist ein Gehäuse 12 auf, das z.B. in das Armaturenbrett eines Kraftfahrzeuges eingesetzt wird.

Am Gehäuse 12 ist ein Anlagering 13 angebracht. Der Anlagering 13 dient zur Befestigung des Luftauströmers 10 z.B. im nicht näher gezeigten Armaturenbrett.

Der Luftausströmer 10 weist weiter einen Einstelleinsatz 14 auf. Zu dem Einstelleinsatz 14 gehören als außenliegende Komponenten ein Verstellring 16 und ein Zierring 18.

Der Zierring 18 ist in den Verstellring 16 eingeklipst und so fest mit dem Verstellring 16 verbunden. Außerdem weist der Verstellring 16 eine Nase 19 mit einem hinterleuchtbaren Abschnitt 20 auf.

Der Luftausströmer 10 und seine Komponenten, also das Gehäuse 12, der Einstelleinsatz 14, der Verstellring 16, Zierring 18 und der hinterleuchtbare Abschnitt 20 bestehen aus Kunststoff.

Der hinterleuchtbare Abschnitt 20 ist in der Nase 19 des Zierringes 18 angeordnet, die einstückig an dem Zierring 18 ausgebildet ist. Die Form der Nase 19 ist einem Trapez angenähert und an den Ecken abgerundet.

Der Verstellring 16 weist eine ringförmige Nut 17 auf, in die der Zierring 18 eingeklipst wird.

Im Bereich des hinterleuchtbaren Abschnittes 20 weist der Verstellring 16 eine umgekehrt trapezförmige Ausnehmung 22 auf, die die Nase 19 an seinen Ränder einfasst, sie aber nicht verdeckt.

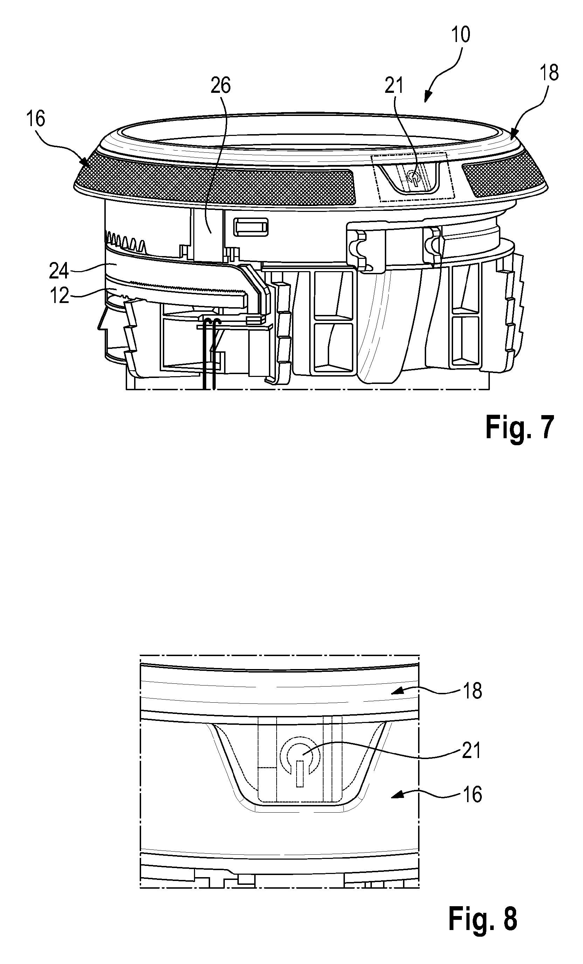

Der hinterleuchtbare Abschnitt 20 ist ein An-Aus-Symbol 21 (vgl. Figur 7 und Figur 8).

Figur 2 zeigt eine Draufsicht auf den Luftausströmer 10 gemäß Figur 1. Die Lamellenpakete des Luftausströmers 10 sind hier nicht dargestellt.

Wie aus Figur 2 ersichtlich ist, weist der Einstelleinsatz 14 einen ersten Drehanschlag D1 und einen zweiten Drehanschlag D2 auf, die einen Betätigungsbereich für den Einstelleinsatz 14 definieren. Zwischen dem Drehanschlag D1 und dem Drehanschlag D2 ist ein Betätigungsbereich von ca. 80° vorhanden, der durch den Drehanschlag D1 und den Drehanschlag D2 definiert wird.

Alternativ kann aber beispielsweise vorgesehen sein, dass der erste Drehanschlag auf ca. "15:00 Uhr" und der zweite Drehanschlag auf ca. "9:00 Uhr" angeordnet ist. Dadurch ergibt sich ein Betätigungsbereich von ca. 180°.

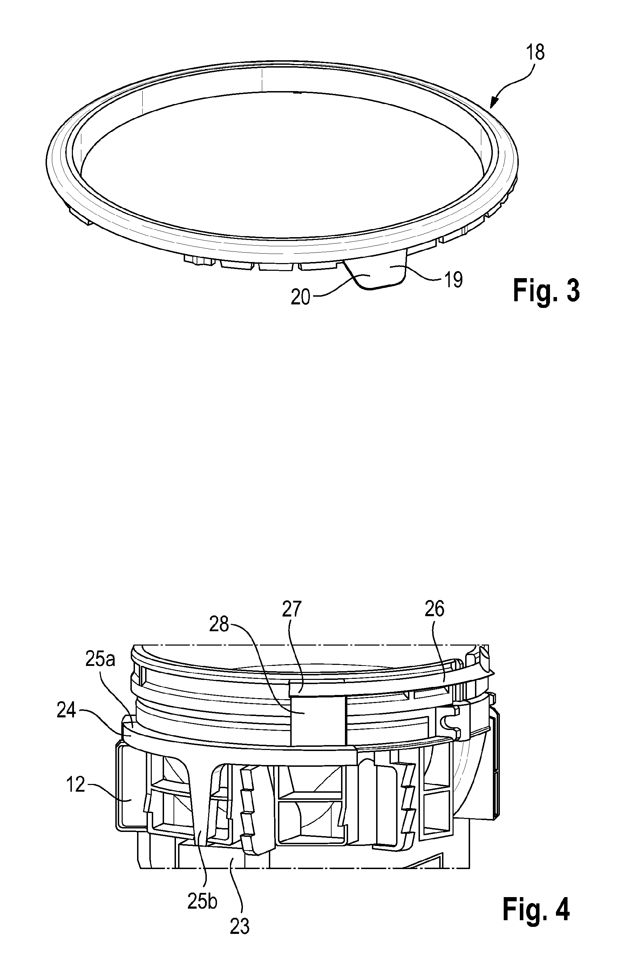

Figur 3 zeigt eine perspektivische Ansicht des Zierringes 18 des Luftausströmers 10.

Der Zierring 18 weist dabei eine Oberseite auf, die nach dem Einsetzen in den Verstellring 16 ersichtlich ist und aus dem Verstellring 16 heraussteht. Vorzugsweise sind der Zierring 18 und der Verstellring 16 derart geformt, dass nach dem Einsetzen die außenliegenden Oberflächen des Zierringes 18 und des Verstellringes 16 keine Stufe bilden.

Figur 4 zeigt eine perspektivische Detailansicht auf den ersten Lichtleiter 24 und den zweiten Lichtleiter 26 des Luftausströmers 10.

Der erste Lichtleiter 24 ist am Gehäuse 12 befestigt und weist einen stegartigen Abschnitt 25a auf. Der stegartigen Abschnitt 25a ist gebogen und mit seiner Krümmung an die Krümmung der Oberfläche des Gehäuses 12 angepasst.

Der erste Lichtleiter 24 ist im hier gezeigten Ausführungsbeispiel ins Gehäuse 12 eingeklipst.

Es ist möglich, dass der erste Lichtleiter 24 ganz oder teilweise als Leuchtfolie ausgebildet ist.

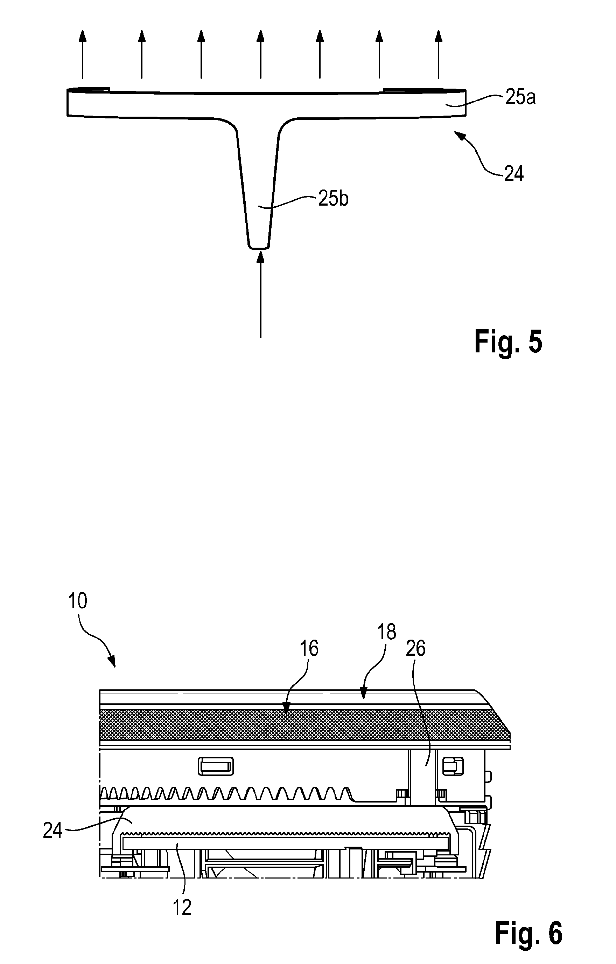

Der erste Lichtleiter 24 weist weiter einen Lichteinkoppelabschnitt 25b auf, der als nasen- bzw. lanzenartiger Vorsprung ausgebildet ist (vgl. auch Figur 5). Der Lichteinkoppelabschnitt 25b zeigt im montierten Zustand in Richtung des Einströmbereichs des Luftausströmers 10 und ist somit entgegen der Ausströmrichtung orientiert.

Die Spitze des Lichtkoppelabschnittes 25b ist in der Nähe einer oder mehrerer LEDs angeordnet. Die eingesetzte LED bzw. die eingesetzten LEDs kann bzw. können RGB-LED(s) sein.

In Figur 4 ist das LED-Gehäuse 23 gezeigt, in dem mehrere LEDs angeordnet sind.

Alternativ kann aber vorgesehen sein, dass kein LED-Gehäuse vorgesehen ist. Die LED oder die LEDs können direkt im Ausströmergehäuse befestigt (z.B. verklipst) werden. Möglich ist in diesem Zusammenhang, dass die LED oder die LEDs mit dem Anlagering 13 (vgl. Figur 1) teilweise überdeckt werden.

Weiter sind der Verstellring 16 und der zweite Lichtleiter 26 fest miteinander verbunden. Der zweite Lichtleiter 26 ist hier in den Verstellring 16 eingeklipst.

Der zweite Lichtleiter 26 weist einen stegartigen Abschnitt 27 auf, der gebogen ist und mit seiner Krümmung an die Krümmung der Oberfläche des Verstellringes 16 angepasst ist.

Außerdem weist der zweite Lichtleiter 26 einen Lichtaufnehmabschnitt 28 auf. Der Lichtaufnehmabschnitt 28 ist einstückig an dem zweiten Lichtleiter 26 angeformt und befindet sich im eingebauten Zustand zwischen dem stegartigen Abschnitt 25a des ersten Lichtleiters 24 und stegartigen Abschnitt 27 des zweiten Lichtleiters.

Der erste Lichtleiter 24 und der zweite Lichtleiter 26 berühren sich nicht, weil zwischen dem Lichtaufnehmabschnitt 28 und dem stegartigen Abschnitt 25a des ersten Lichtleiters 24 ein Spalt 30 vorhanden ist. Dieser Spalt 30 hat beispielswiese eine Höhe von weniger als einem Millimeter. In dem gezeigten Ausführungsbeispiel hat der Spalt 30 eine Höhe von ca. 0,5 mm.

Figur 6 zeigt eine perspektivische Seitenansicht auf die beiden Lichtleiter 24, 26 des Luftausströmers 10. Der Lichtleiter 24 ist in das Gehäuse 12 des Luftausströmers 10 eingeklipst.

Im Gegensatz zu Figur 4 ist in Figur 6 bereits der Verstellring 16 und der Zierring 18 montiert. Figur 7 zeigt den Montagezustand gemäß Figur 6. Gut zu erkennen ist in Figur 7 und 8 das An-Aus-Symbol 21.

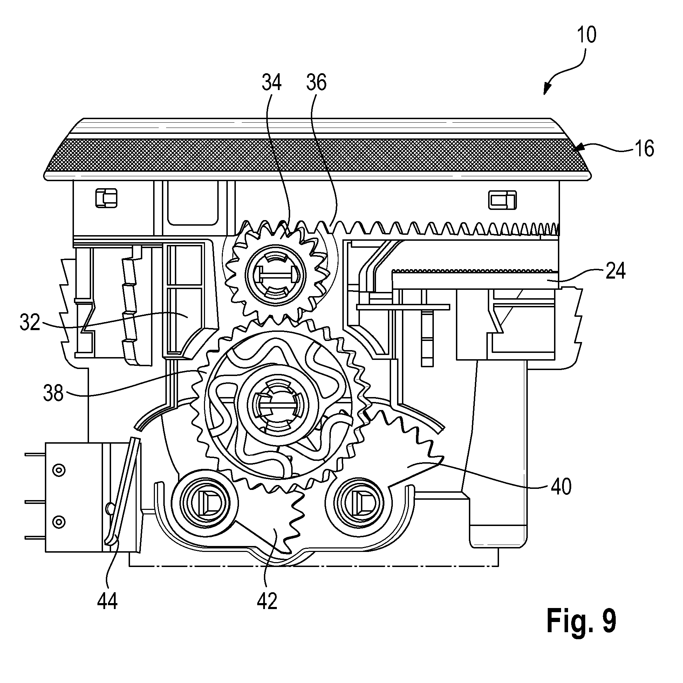

Figur 9 zeigt eine perspektivische Seitenansicht auf das Klappenbetätigungsgetriebe 32 des Luftausströmers 10.

Das Klappenbetätigungsgetriebe 32 umfasst ein erstes Zahnrad 34, das mit einer Verzahnung 36 des Verstellringes 16 kämmt. Dieses erste Zahnrad 34 kämmt ferner mit einem zweiten Zahnrad 38. Das zweite Zahnrad 38 steht über nicht näher gezeigte Verzahnungsmittel mit den Hebeln 40 und 42 in Verbindung.

Auf Höhe der Hebel 40 und 42 ist ein LED-Ein-Aus-Schalter 44 vorgesehen. Dieser LED-Ein-Aus-Schalter 44 ist optional und Bestandteil einer möglichen Ausführungsform der Erfindung. Grundsätzlich ist aber auch denkbar, dass ein derartiger LED-Ein-Aus-Schalter 44 nicht vorgesehen ist.

Die Funktion und Verstellung des Luftausströmers 10 wird nachstehend beschrieben:
Der Einstelleinsatz 14 ist ausschließlich zwischen dem ersten Drehanschlag D1 und dem zweiten Drehanschlag D2 verdrehbar (vgl. Figur 2). Die Einstellung der Luftausströmung erfolgt ausschließlich zwischen dem ersten und zweiten Drehanschlag D1 und D2.

Durch eine Verdrehung des Verstellringes 16 dreht dieser mit seiner Verzahnung 36 das erste Zahnrad 34. Dieses Zahnrad 34 wiederum kämmt mit dem zweiten Zahnrad 38 und die Hebel 40 und 42 werden entsprechend der Verdrehung des Verstellringes 16 verstellt. Die nicht näher gezeigten Klappen des Luftausströmers werden entsprechend der Verdrehung des Verstellringes 16 geöffnet, teilweise geöffnet oder geschlossen.

Wenn der Einstelleinsatz 14 in der Stellung des ersten Drehanschlag D1 ist, erfolgt keine Ausströmung durch den Luftausströmer 10. In dieser Stellung ist auch das An-Aus-Symbols 21 des Luftausströmers 10 ausgeschaltet.

In der Stellung des zweiten Drehanschlags D2 erfolgt die volle Ausströmung durch den Luftausströmer 10. In dieser Stellung ist das An-Aus-Symbols 21 des Luftausströmers 10 eingeschaltet.

Die Beleuchtung des An-Aus-Symbols 21 kann gedimmt werden.

Es ist möglich, dass der Luftauströmer 10 beleuchtet wird, sobald das Fahrzeug entriegelt oder gestartet wird bzw. sobald die die Beleuchtung des Fahrzeugs eingeschaltet wird.

Denkbar ist auch, dass die Lichtintensität mit zunehmenden Öffnen der Klappen des Luftausströmers 10 gesteigert wird.

Es kann vorgesehen sein, dass sich die Helligkeit der Beleuchtung des An-Aus-Symbols 21 konform zum Luftvolumenstrom verhält. Der LED-Ein-Aus-Schalter 44 ist Teil einer Schaltvorrichtung, die die Beleuchtung des An-Aus-Symbols 21 des Luftausströmers 10 aus- oder einschaltet. Das Erreichen oder Verlassen des ersten Drehanschlages D1 betätigt die Schaltvorrichtung, weil der Hebel 42 gegen den LED-Ein-Aus-Schalter 44 gedreht wird und diesen eindrückt.

Wenn der LED-Ein-Aus-Schalter 44 gedrückt ist, sind die LEDs ausgeschaltet.

Es ist möglich, dass das Einschalten der LEDs erst erfolgt, wenn der Verstellring 16 aus der Nullstellung des ersten Drehanschlages D1 um ca. 10° in Richtung des zweiten Drehanschlages D2 verdreht wurde.

Wenn die LEDs eingeschaltet sind, wird das von den LEDs im LED-Gehäuse 23 emittierte Licht über den Lichtkoppelabschnittes 25 aufgenommen und über den stegartigen Abschnitt 25a abgestrahlt (siehe auch Figur 5).

Durch den Einsatz von wenigstens einer RGB-LED kann die Farbe der Beleuchtung eingestellt werden oder durch den Fahrer frei wählbar sein. Möglich ist auch, dass die Farbe der Beleuchtung an Fahr-Modi des Herstellers voreinstellbar bzw. anpassbar ist. So kann beispielsweise dem ECO-Modus eine grüne Beleuchtung und dem Sport-Modus eine rote Beleuchtung usw. zugeordnet sein.Der Lichtaufnehmabschnitt 28 des zweiten Lichtleiters 26 nimmt das vom stegartigen Abschnitt 25a abgestrahlte Licht auf und kanalisiert es.

Über den stegartigen Abschnitt 27 kann in den möglichen Verdrehstellungen stets der hinterleuchtbare Abschnitt 20, also das An-Aus-Symbol 21 mit konstanter Lichtintensität beleuchtet werden.

Der zweite Lichtleiter 26 wird im Wesentlichen über den gesamten Verstellbereich homogen durch den ersten Lichtleiter 24 beleuchtet. Somit wird auch der hinterleuchtbare Abschnitt 20 bei eingeschalteter Beleuchtung mit derselben Intensität hinterleuchtet.

Durch den Umstand, dass zwischen dem stegartigen Abschnitt 25a und dem Lichtaufnehmabschnitt 28 ein Spalt ist, sind der erste Lichtleiter 24 und der zweite Lichtleiter 26 gegeneinander verdrehbar.

## Patentansprüche

1. Luftausströmer (10) mit einem Einstelleinsatz (14) zur Einstellung des durch den Luftausströmer (10) ausströmenden Luftstromes, wobei der Luftstrom durch eine Verdrehung des Einstelleinsatzes (14) einstellbar ist, mit wenigstens einem ersten Lichtleiter (24) und mit wenigstens einem zweiten Lichtleiter (26), wobei der erste Lichtleiter (24) fest an einem Gehäuse (12) des Luftausströmers (10) und der zweite Lichtleiter (26) fest am Einstelleinsatz (14) befestigt ist, wobei der erste Lichtleiter (24) und der zweite Lichtleiter (26) gegeneinander verdrehbar sind und der zweite Lichtleiter (26) durch den ersten Lichtleiter (24) beleuchtbar ist und durch den zweiten Lichtleiter (26) ein hinterleuchtbarer Abschnitt (20) des Einstelleinsatzes (14) beleuchtbar ist.

2. Luftausströmer (10) nach Anspruch 1, **dadurch gekennzeichnet, dass** der Einstelleinsatz (14) einen Verstellring (16) umfasst, wobei der Verstellring (16) und der zweite Lichtleiter (26) miteinander verbunden sind.

3. Luftausströmer (10) nach Anspruch 1 oder 2, **dadurch gekennzeichnet, dass** der Einstelleinsatz (14) einen Zierring (18) umfasst, in dem der hinterleuchtbare Abschnitt (20) angeordnet ist.

4. Luftausströmer (10) nach Anspruch 3, **dadurch gekennzeichnet, dass** der hinterleuchtbare Abschnitt (20) ein An-Aus-Symbol (21) ist.

5. Luftausströmer (10) nach einem der vorhergehenden Ansprüche, **dadurch gekennzeichnet, dass** zweite Lichtleiter (26) einen Lichtaufnehmabschnitt (28) aufweist, mittels dessen das Licht vom ersten Lichtleiter (24) zum zweiten Lichtleiter (26) kanalisiert übertragbar ist.

6. Luftausströmer (10) nach einem der vorhergehenden Ansprüche, **dadurch gekennzeichnet, dass** der erste und der zweite Lichtleiter (24, 26) sich nicht berühren.

7. Luftausströmer (10) nach einem der vorhergehenden Ansprüche, **dadurch gekennzeichnet, dass** der Einstelleinsatz (14) einen ersten Drehanschlag (D1) und einen zweiten Drehanschlag (D2) aufweist, die einen Betätigungsbereich für den Einstelleinsatz (14) definieren.

8. Luftausströmer (10) nach Anspruch 7, **dadurch gekennzeichnet, dass** eine Schaltvorrichtung vorgesehen ist, die die Beleuchtung des Luftausströmers (10) aus- oder einschaltet, und dass das Erreichen oder Verlassen des ersten Drehanschlages (D1) die Schaltvorrichtung betätigt.

9. Luftausströmer (10) nach Anspruch 7 oder 8, **dadurch gekennzeichnet, dass** in der Stellung des ersten Drehanschlages (D1) der Luftausströmer (10) verschlossen ist, so dass keine Luft durch den Luftausströmer (10) ausströmt, und dass in der Stellung des zweiten Drehanschlages (D2) der Luftausströmer (10) maximal geöffnet ist.

10. Luftausströmer (10) nach einem der Ansprüche 7 bis 9, **dadurch gekennzeichnet, dass** die Verstellvorrichtung wenigstens ein Getriebeelement zur Betätigung einer Klappenmechanik des Luftausströmers (10) umfasst, wobei mittels des Getriebeelementes zugleich die Schaltvorrichtung betätigbar ist.

## Claims

1. An air vent (10) comprising an adjustment insert (14) for adjusting the air stream flowing out through the air vent (10), the air stream being adjustable by rotating the adjustment insert (14), comprising at least one first light guide (24) and at least one second light guide (26), the first light guide (24) being firmly attached to a housing (12) of the air vent (10) and the second light guide (26) being firmly attached to the adjustment insert (14), the first light guide (24) and the second light guide (26) being rotatable against each other, and the second light guide (26) being adapted to be illuminated by the first light guide (24), and a backlightable portion (20) of the adjustment insert (14) being adapted to be illuminated by the second light guide (26).

2. The air vent (10) according to claim 1, **characterized in that** the adjustment insert (14) comprises an adjustment ring (16), the adjustment ring (16) and the second light guide (26) being connected with each other.

3. The air vent (10) according to claim 1 or 2, **characterized in that** the adjustment insert (14) comprises a decorative ring (18) in which the backlightable portion (20) is arranged.

4. The air vent (10) according to claim 3, **characterized in that** the backlightable portion (20) is an on-off symbol (21).

5. The air vent (10) according to any of the preceding claims, **characterized in that** the second light guide (26) includes a light receiving portion (28) by means of which the light can be transmitted from the first light guide (24) to the second light guide (26) in a channeled manner.

6. The air vent (10) according to any of the preceding claims, **characterized in that** the first and second light guides (24, 26) do not contact each other.

7. The air vent (10) according to any of the preceding claims, **characterized in that** the adjustment insert (14) includes a first rotary stop (D1) and a second rotary stop (D2), which define an actuation range for the adjustment insert (14).

8. The air vent (10) according to claim 7, **characterized in that** a switching device is provided which switches the illumination of the air vent (10) on or off, and **in that** reaching or leaving the first rotary stop (D1) actuates the switching device.

9. The air vent (10) according to claim 7 or 8, **characterized in that** in the position of the first rotary stop (D1) the air vent (10) is closed, so that no air flows out through the air vent (10), and **in that** in the position of the second rotary stop (D2) the air vent (10) is maximally open.

10. The air vent (10) according to any of claims 7 to 9, **characterized in that** the adjustment device comprises at least one transmission element for actuating a flap mechanism of the air vent (10), wherein by means of the transmission element the switching device can be actuated at the same time.

## Revendications

1. Diffuseur d'air (10) comportant un insert de réglage (14) pour régler le flux d'air s'échappant à travers le diffuseur d'air (10), le flux d'air étant apte à être réglé par une rotation de l'insert de réglage (14), comportant au moins un premier guide de lumière (24) et au moins un deuxième guide de lumière (26), le premier guide de lumière (24) étant fixé de manière solidaire à un boîtier (12) du diffuseur d'air (10), et le deuxième guide de lumière (26) étant fixé de manière solidaire à l'insert de réglage (14), le premier guide de lumière (24) et le deuxième guide de lumière (26) étant rotatifs l'un à l'encontre de l'autre, le deuxième guide de lumière (26) étant apte à être illuminé par le premier guide de lumière (24), et un tronçon (20) de l'insert de réglage (14) pouvant être rétroéclairé étant apte à être illuminé par le deuxième guide de lumière (26).

2. Diffuseur d'air (10) selon la revendication 1, **caractérisé en ce que** l'insert de réglage (14) comprend un anneau d'ajustage (16), l'anneau d'ajustage (16) et le deuxième guide de lumière (26) étant reliés l'une à l'autre.

3. Diffuseur d'air (10) selon la revendication 1 ou 2, **caractérisé en ce que** l'insert de réglage (14) comprend un anneau enjoliveur (18) dans lequel le tronçon (20) apte à être rétroéclairé est agencé.

4. Diffuseur d'air (10) selon la revendication 3, **caractérisé en ce que** le tronçon (20) apte à être rétroéclairé est un symbole (21) de marche-arrêt.

5. Diffuseur d'air (10) selon l'une des revendications précédentes, **caractérisé en ce que** le deuxième guide de lumière (26) présente un tronçon de réception de lumière (28) au moyen duquel la lumière peut être transmise de manière canalisée du premier guide de lumière (24) vers le deuxième guide de lumière (26).

6. Diffuseur d'air (10) selon l'une des revendications précédentes, **caractérisé en ce que** les premier et deuxième guides de lumière (24, 26) ne se touchent pas.

7. Diffuseur d'air (10) selon l'une des revendications précédentes, **caractérisé en ce que** l'insert de réglage (14) présente une première butée de rotation (D1) et une deuxième butée de rotation (D2) qui définissent une zone d'actionnement pour l'insert de réglage (14).

8. Diffuseur d'air (10) selon la revendication 7, **caractérisé en ce qu'**il est prévu un dispositif de commutation qui arrête ou met l'éclairage du diffuseur d'air (10) en marche, et **en ce que** le fait de parvenir à la première butée de rotation (D1) ou de la quitter actionne le dispositif de commutation.

9. Diffuseur d'air (10) selon la revendication 7 ou 8, **caractérisé en ce que** dans la position de la première butée de rotation (D1), le diffuseur d'air (10) est fermé de sorte qu'il n'y pas d'air qui s'échappe à travers le diffuseur d'air (10), et **en ce que** dans la position de la deuxième butée de rotation (D2), le diffuseur d'air (10) est ouvert au maximum.

10. Diffuseur d'air (10) selon l'une des revendications 7 à 9, **caractérisé en ce que** le dispositif d'ajustage comprend au moins un élément d'engrenage pour l'actionnement d'un mécanisme à clapet du diffuseur d'air (10), le dispositif de commutation étant en même temps apte à être actionné au moyen de l'élément d'engrenage.
